# EUROPEAN PATENT APPLICATION

(11) **EP 3 989 630 A1**
(43) Date of publication of application: **27.04.2022**
(21) Application number: 20202910.4
(22) Date of filing: 20.10.2020
(51) Int. Cl.: H04W 24/02, H04W 24/08

(54) **A METHOD IN A TELECOMMUNICATIONS SYSTEM, A TELECOMMUNICATIONS SYSTEM, A USER EQUIPMENT AND A BASE STATION AND METHODS THEREIN FOR INTERACTING APPLICATION EXECUTION WITH RADIO PARAMETERS**

(71) Applicant: FUJITSU LIMITED, Kanagawa 211-8588 (JP)
(72) Inventor: BUCKNELL, Paul, Peacehaven, East Sussex BN10 7AJ (GB); MOULSLEY, Timothy,, Caterham, Surrey CR3 5EE (GB)
(74) Representative: Haseltine Lake Kempner LLP

(57) **Abstract**

A method in a telecommunications system including a User Equipment, UE, at which a local part of an application producing application data executes and a base station, at which a remote part of the application executes, the method comprising: when the local part of the application at the UE starts to execute, the UE sending an initial connection message to the base station to initiate a connection with the base station, the initial connection message including an application parameter generated by the local part of the application; and the base station passing the application parameter to the remote part of the application.

## Description

### Field of the Invention

The present invention relates to a method in a wireless communication network. The present invention further relates to a user equipment and base station and methods therein.

Particularly, but not exclusively, the present invention relates to techniques for adapting methods and elements in a wireless communication network such as a 4G (LTE-A) or 5G (also known as New Radio, NR) wireless communication network for use with resource-intensive applications such as AI (Artificial Intelligence) applications, video processing or real-time control.

### Background of the Invention

Wireless communication networks are widely known in which terminals (also called user equipments or UEs, subscriber or mobile stations) communicate over an air interface with base stations within communication range of the terminals. This part of the network is known as a Radio Access Network (RAN). Further communication may take place in a core network between base stations and other entities, usually with wired connections.

The geographical areas served by one or more base stations are generally referred to as cells, and typically many base stations are provided in appropriate locations so as to form a system covering a wide geographical area, more or less seamlessly with adjacent and/or overlapping cells.

Typically, many transmission points are provided in appropriate locations so as to form a network covering a wide geographical area more or less seamlessly with adjacent and/or overlapping cells (in this specification, the terms "system" and "network" are used synonymously). For each cell, a base station, which provides or at least manages the transmission point, divides the available bandwidth, i.e. frequency and time resources, into individual resource allocations for the terminals served by the cell. In this way, a signal transmitted in a cell and scheduled by the base station has a specific location in the frequency and time domains. The terminals may be mobile and therefore may move among the cells, prompting a need for handover of the connection of the terminal to the network as the terminal moves between adjacent cells. A terminal may be in range of (i.e. able to detect signals from and/or communicate with) several cells at the same time, but in the simplest case it communicates with one "serving" cell. A terminal is normally only able to access a single network provided by a single operator. However, networks/operators may cooperate.

A Radio Access Technology, RAT, is an underlying physical connection method for a radio-based (wireless) communication network. One Radio Access Technology, RAT, or type of wireless system is based upon the set of standards referred to as Long-Term Evolution, LTE or LTE-A (Advanced) for later versions. In the system topology, in LTE (which is used here in general for LTE and LTE-A), each terminal - a UE - connects wirelessly over a radio/air interface (Uu) to a base station in the form of an enhanced node-B or eNB. This base station may be functionally separated into a baseband unit (BBU) which generates and processes a digitized baseband RF signal, and a remote radio head (RRH) which creates the analogue transmit RF signal from the baseband signal and sources it to the antenna, and on the other hand, digitizes the RF receive signal.

Incidentally, the above discussion by default refers to UEs operated by human users, for example in the form of mobile phones, laptop computers and PDAs or tablets. However, a wireless communication network may also be used for so-called Machine Type Communication (MTC) used in the Internet of Things (loT), where MTC is a form of data communication that involves one or more entities that do not necessarily need human interaction. Entities involved in MTC, henceforth referred to as MTC devices (or terminals), are also to be considered as a kind of UE except where the context demands otherwise. Applications of MTC devices include sensors, video/imaging devices, fleet management, smart metering, product tracking, home automation, e-health, etc. MTC or loT devices are often in fixed locations, in contrast to the mobile devices of human users, or they may be positioned, for example on drones or other vehicles.

A next-generation radio access system to succeed LTE is known as "5G" or "NR" (New Radio) and is needed to satisfy modern requirements for increased bandwidth, efficiency and flexibility.

As part of the physical layer 1 (PHY) design in 5G, the traditional concept of a base station that both schedules resources and houses the physical antennas for wireless communication with terminals (whether for human use or as part of the loT), becomes more fluid. Terminology used with respect to 5G/NR includes "gNB" (next generation Node B), which manages (either locally or remotely) at least one transmission point. Such a transmission point may also serve as a reception point (replacing the RRH of LTE) and is typically referred to as a TRP or TRxP (Transmission/Reception Point). Another change in 5G is that the original Base Band Unit (BBU) of 4G/LTE in 5G is now split into the Central Unit (CU) and the Distributed Unit (DU).

In the 4G core network (CN), called the Evolved Packet Core (EPC), protocol and reference points (interfaces) are defined for each entity such as the Mobility Management Entity (MME), Serving Gateway (S-GW), and Packet Data Network Gateway (P-GW) as described above. Alternatively, in the 5G core (NGC), protocol and reference points (interfaces) are defined for each Network Function (NF). A NF may be implemented either as a network element on a dedicated hardware, as a software instance running on a dedicated hardware, or as a virtualised function (not limited to specific hardware) instantiated on an appropriate platform, e.g., a cloud infrastructure.

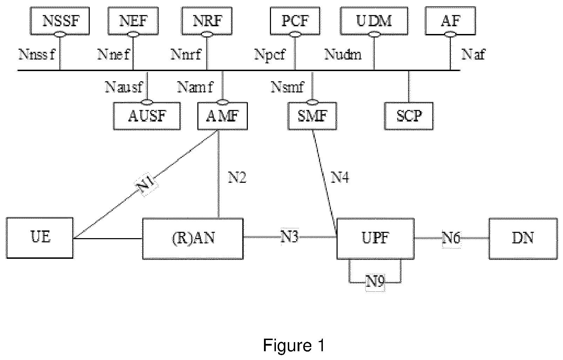

Figure 1 depicts the non-roaming reference 5G System architecture.

Specification 3GPP TS 23.501 describes the architecture for the 5G System. The 5G architecture is defined as service-based and the interaction between network functions is represented in two ways:
- A service-based representation, where network functions (NFs) (e.g. AMF) within the Control Plane enables other authorized network functions to access their services. This representation also includes point-to-point reference points where necessary.
- A reference point representation, which shows the interaction existing between the NF services in the network functions described by point-to-point reference point (e.g. N11) between any two network functions (e.g. AMF and SMF).

Service-based interfaces are used within the Control Plane. The 5G System architecture consists of the following network functions (NF) (not all of which are shown in Figure 1):
- Authentication Server Function (AUSF).
- Access and Mobility Management Function (AMF).
- Data Network (DN), e.g. operator services, Internet access or 3rd party services.
- Unstructured Data Storage Function (UDSF).
- Network Exposure Function (NEF).
- Network Repository Function (NRF).
- Network Slice Specific Authentication and Authorization Function (NSSAAF).
- Network Slice Selection Function (NSSF).
- Policy Control Function (PCF).
- Session Management Function (SMF).
- Unified Data Management (UDM).
- Unified Data Repository (UDR).
- User Plane Function (UPF).
- UE radio Capability Management Function (UCMF).
- Application Function (AF).
- User Equipment (UE).
- (Radio) Access Network ((R)AN).
- 5G-Equipment Identity Register (5G-EIR).
- Network Data Analytics Function (NWDAF).
- CHarging Function (CHF).

The 5G System architecture also comprises the following network entities:
- Service Communication Proxy (SCP).
- Security Edge Protection Proxy (SEPP).

The UE is shown at the bottom left, connected to the RAN (the gNB). There is also a direct connection between the UE and the 5G Core Access and Mobility Management Function (AMF) via the N1 interface, mainly for non-access stratum (NAS) signalling. The User Plane Function (UPF) is one of the network functions (NFs) of the 5G core network (5GC) listed above. The UPF is responsible for packet routing and forwarding, packet inspection, QoS handling, and external PDU session for interconnecting Data Network (DN), in the 5G architecture. The gNB (RAN) connects with the UPF over the N3 interface (the N9 interface is between two different UPFs - not shown). The N4 interface connects the UPF to the Session Management Function (SMF) and the N2 interface connects the RAN (that is the gNB) to the AMF. The N6 interface is to the Data Network (DN) and this is where a connection to a server/entity running an AI or other algorithmic application is likely to be situated.

In the architecture shown in Figure 1, User Plane (UP) Data is transferred though the User Plane Function (UPF) to the Data Network (DN).

A recent development in RAN architecture is the O-RAN architecture (Open Radio Access Network).

The deconstruction of base stations to separate RRH and BBU creates the need for a fronthaul transport network between these two entities which is able to carry antenna samples. This fronthaul may use CPRI (common public radio interface) or OBSAI (open base station architecture initiative) protocols.

CPRI is the more popular choice and defines a simple synchronous protocol to map user data that will be transmitted from a radio unit. This simplicity enables cost-effective and small form factor designs and permits coordination of base stations with features such as CoMP, but has high bandwidth requirements. Another concern is related to MIMO scale adoption; CPRI requires a dedicated link for every antenna. An alternative solution is required, and this is where O-RAN may be used.

O-RAN gives a disaggregated approach to mobile fronthaul and midhaul networks, build on cloud principles, allowing interoperability and standardization of RAN elements. O-RAN works with existing technologies such as 4G and 5G (NR), interfacing with the EPC or NGC.

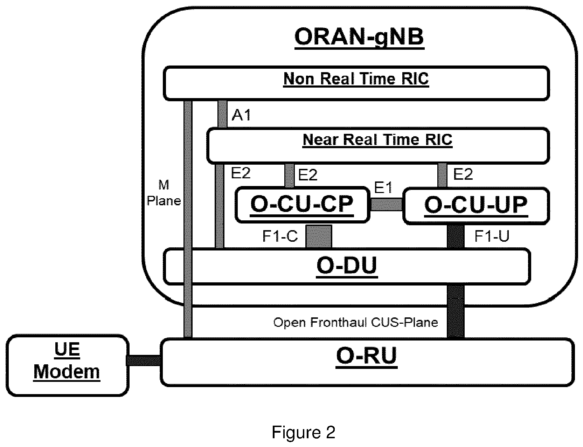

A simplified O-RAN Architecture is shown in Figure 2, in an NR example. Here the RRH, DU and CU in 5G are replaced by the O-RU, O-DU and the O-CU-CP (O-RAN Central Unit - Control Plane) and O-CU-UP(O-RAN Central Unit - User Plane), dividing the CU between the control plane and the user plane. A critical point in fronthaul design is the "functional split" separating which Layer 1 (physical layer), 2 (data link layer) and 3 (transport layer) functions reside in the RRH (O-RU), and which of these processing functions reside at the BBU. O-RAN encompasses different splits.

The O-RU is an O-RAN distributed unit, which is a logical node, for example hosting RF/low-physical layers based on a lower layer functional split.

The O-DU (O-RAN Distributed Unit) is connected to the O-RU and contains the remainder of the lower layer functionality split (in one of various different splits between the O-RU and O-DU) and RLC and MAC layers. The two neighbouring elements in the diagram are the O-CU-CP and O-CU-UP. Both units are connected to the Near-RT RIC (O-RAN near real time RAN Intelligent Controller) and there is also a Non-RT RIC (O-RAN non real time RAN intelligent controller). Non-RT functions include service and policy management, RAN analytics and model-training for the near-RT RAN functionality. Trained models and real-time control functions produced in the RIC non-RT are distributed to the RIC near-RT for runtime execution. The O-RAN reference architecture provides next generation Radio Resource Management (RRM) with embedded intelligence, while optionally accommodating legacy RRM. This resides within the RIC Near RT function layer.

Turning to the interfaces between these elements, E2 is a logical interface connecting the near-RT RIC with an E2 Node (O-DU, O-CU-CP and O-CU-UP). The E2 Interface supports Control Plane protocols (No UP).

E2 supports both Near-RT RIC Services (REPORT, INSERT, CONTROL and POLICY) and Near-RT RIC support functions, which include E2 Interface Management (E2 Setup, E2 Reset, and Reporting of General Error Situations) and Near-RT RIC Service Update (i.e., capability exchange related to the list of E2 Node functions exposed over E2)

The E2 Interface includes O-RAN RRC Information Element (IE) data collection, including: UE Measurements and Configuration Information. This is achieved by directly accessing the RRC IE from the RRC Protocol running in the O-CU in the O-RAN-gNB.

The A1 interface between Near-RT RIC and the Non-RT RIC supports O-RAN RRC IE data collection, including: Network Measurements and Context Information.

### Summary of the Invention

It is desirable to adapt current radio technologies to allow bandwidth- and data-efficient use of applications running on the terminal and/or at the base station, particularly applications which are computationally intensive, such as Al applications.
According to a first aspect of the invention, there is provided a method in a telecommunications system including a User Equipment, UE, at which a local part of an application producing application data executes and a base station, at which a remote part of the application executes, the method comprising: when the local part of the application at the UE starts to execute, the UE sending an initial connection message to the base station to initiate a connection with the base station, the initial connection message including an application parameter generated by the local part of the application; and the base station passing the application parameter to the remote part of the application.

The application parameter may be used in a number of different ways at the remote application part. For example it may simply contain useful information or control the way the remote and/or local application parts execute (for instance based on knowledge at the UE of local circumstances), or it may be used to control/change some aspect of the data transmission to/from the UE, such as data rate/change of resources allocated.

Thus the base station in response to receipt of the application parameter may send feedback from the remote part of the application to the UE and/or change the execution of the application and/or change one or more transmission parameters in response to the application parameter.

The application is assumed to be distributed, including at least one local part at a UE and at least one remote part at a base station. In some arrangements, there are a plurality of local parts (one per UE) feeding into a single remote part, for example in a base station and/or in the core network connected to the base station. In one arrangement included within the claim scope, the distributed application may comprise separate applications running locally and remotely which combine to give the functionality of a single distributed application.

The application parameter may be sent in a data channel with the application data. In other arrangements, the application parameter may be sent in a control channel. For example this may be a control channel used to set up the UE connection with the base station. Thus the application parameter may be embedded within a Radio Resource Control, RRC, message.

The method may further comprise transfer of application data produced by the application between the UE and the base station. This may be in parallel with the application parameter.

The remote application may execute directly on the base station or it may execute on an entity in a data network directly connected to the base station. In one arrangement, the application itself executes in the data network but is provided with data from algorithms executing within the base station. Equally, the local application may execute directly on the UE or on a device directly connected to the UE (for example on a device connected to the UE over a wireless network such as a LAN or via Bluetooth or equivalent protocols).

The method is suitable for use with any wireless communication system. In one arrangement, the telecommunications system is a New Radio, NR (or 5G), system and the method further comprises routing application data from the local application to the remote application via the User Plane Function, UPF.

The base station may be any base station, in particular an Open Radio Access Network, O-RAN, base station. In this case the application parameter may be passed via the O-RAN Central Unit - User Plane, O-CU-UP, to the remote application or to algorithms used in the remote application.

The O-RAN base station may pass the application parameter to the application over the E2 interface from the O-CU-UP (O-RAN Central Unit - User Plane) to the application. Algorithms used in the remote application may execute in the Data Network, or potentially in the Non Real Time Radio Access Network Intelligent Controller, Non-RT RIC. Filtering may take place in the Data Network or in the O-RAN Central Unit - User Plane, O-CU-UP, with data is transferred via the UPF to the remote application.

The (distributed) application may be a Machine Learning, ML, application and the application parameter may be an Artificial Intelligence, AI indicator. In one example the AI indicator is used in an inference and/or filtering stage of the ML algorithm, preferably to control filtering of application data sent between the UE and the base station.

According to a further aspect of the invention, there is provided a telecommunications system including a User Equipment, UE, and a base station, wherein: a local part of an application producing application data executes at the UE and a remote part of the application executes at the base station; when the local part of the application starts to execute, the UE is configured to send an initial connection message to the base station to initiate a connection with the base station, the initial connection message including an application parameter generated by the local part of the application; and the base station is configured to pass the application parameter to the remote part of the application.

According to a still further aspect of the invention, there is provided a User Equipment, UE, in a telecommunications system including the UE, at which a local part of an application producing application data executes, and a base station, at which a remote part of an application executes, wherein: when the local part of the application starts to execute, the UE is configured to send an initial connection message to the base station to initiate a connection with the base station, the initial connection message including an application parameter generated by the local part of the application.

According to a corresponding method aspect, there is provided a method in a User Equipment, UE, in a telecommunications system including the UE, at which a local part of an application producing application data executes, and a base station, at which a remote part of the application executes, wherein: when the local part of the application starts to execute, the UE sends an initial connection message to the base station to initiate a connection with the base station, the initial connection message including an application parameter generated by the local part of the application.

According to a yet further aspect of the invention, there is provided a base station in a telecommunications system including a User Equipment, UE, at which a local part of an application producing application data executes, and the base station at which a remote part of an application executes, wherein: the base station is configured to receive an initial connection message sent from the UE to initiate a connection with the base station when the local part of the application starts to execute, the initial connection message including an application parameter generated by the local part of the application; and the base station is configured to pass the application parameter to the remote part of the application.

According to a corresponding method aspect, there is provided a method in a base station in a telecommunications system including a User Equipment, UE, at which a local part of an application producing application data executes and the base station, at which a remote part of the application executes, wherein: the base station receives an initial connection message sent from the UE to initiate a connection with the base station when the local part of the application starts to execute, the initial connection message including an application parameter generated by the local part of the application; and the base station passes the application parameter to the remote part of the application.

A UE/system/base station according to preferred embodiments of the present invention may comprise any combination of the previous method aspects. Methods according to invention embodiments may be described as computer-implemented in that they require processing and memory capability.

The apparatus according to preferred embodiments is described as configured or arranged to carry out certain functions. This configuration or arrangement could be by use of hardware or middleware or any other suitable system. In preferred embodiments, the configuration or arrangement is by software.

According to a further aspect there is provided a computer program comprising instructions which when executed by the UE or base station or network configures the base station or network to carry out the method steps according to any of the preceding method definitions or any combination thereof. The computer program may be stored on a non-transitory computer-readable medium.

In general, the hardware mentioned may comprise elements configured or arranged to provide the functions defined. For example, this hardware may include a receiver, a transmitter (or a combined transceiver), a processor, a memory/storage medium, a user interface and other hardware components generally found in a terminal.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device or in a propagated signal, for execution by, or to control the operation of, one or more hardware modules. A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites on the vehicle or in the back-end system and interconnected by a communication network.

Method steps of the invention may be performed by one or more programmable processors executing a computer program to perform functions of the invention by operating on input data and generating output data.

The invention is described in terms of particular embodiments. Other embodiments are within the scope of the following claims. For example, the steps of the invention may be performed in a different order and still achieve desirable results.

### Brief Description of the Drawings

Reference is made, by way of example only, to the accompanying drawings in which:
Figure 1 is a conceptual diagram of 5G core architecture
Figure 2 is an overview diagram of O-RAN architecture;
Figure 3 is a block diagram illustrating application processing shared between a remote application and a local application;
Figure 4 is a block diagram of the same components as Figure 3, showing an AI data filtering configuration in the UE as well as in the AI algorithms;
Figure 5 is a block diagram of an O-RAN example with data flows;
Figure 6 is a block diagram of an O-RAN example with existing ML processing;
Figure 7 is a block diagram of an O-RAN example with new transfer of an application parameter to the remote AI module;
Figure 8 is the block diagram of Figure 7, including explicit parameters available on the E2 interface;
Figure 9 is a block diagram of AI/ML algorithms as part of an O-RAN gNB;
Figure 10 is a block diagram of AI/ML algorithms with E2 and A1 Information;
Figure 11 is a block diagram of AI/ML algorithms with separation of the remote application from the base station;
Figure 12 is a block diagram of AI/ML algorithms with modification of PDCP/SDAP;
Figure 13 is an overall flow chart;
Figure 14a is a flow chart of initial connection of a UE to the base station with contention resolution;

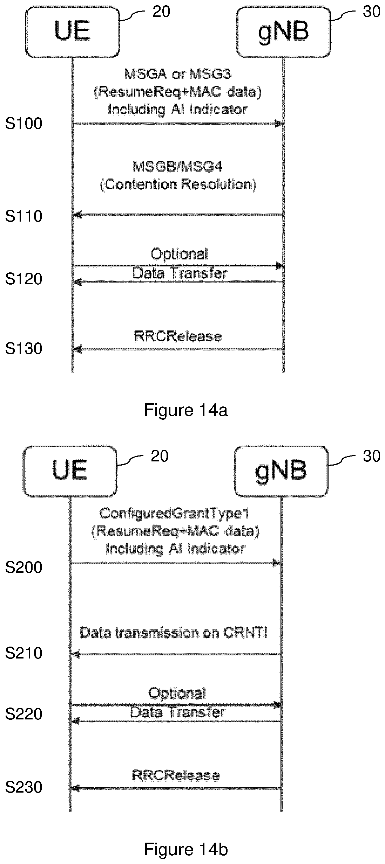

Figure 14a is a flow chart of initial connection of a UE to the base station without contention resolution;

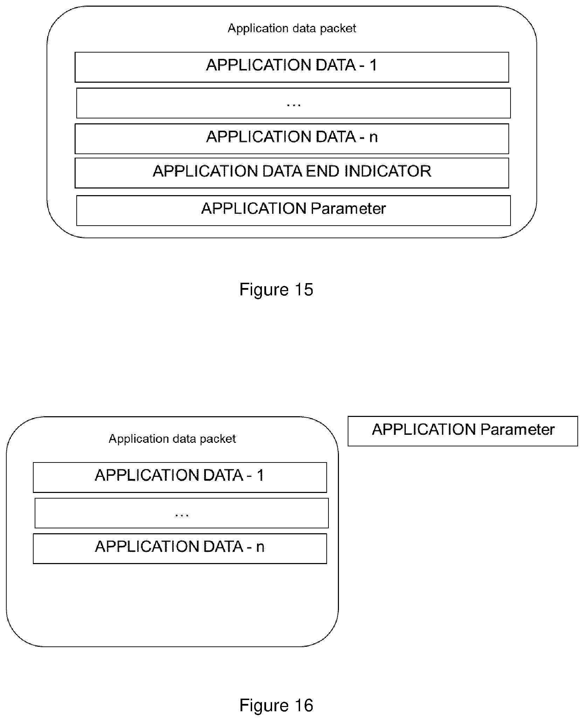

Figure 15 is an example structure of an application parameter sent with data;
Figure 16 is an example structure of an application parameter not sent with data;

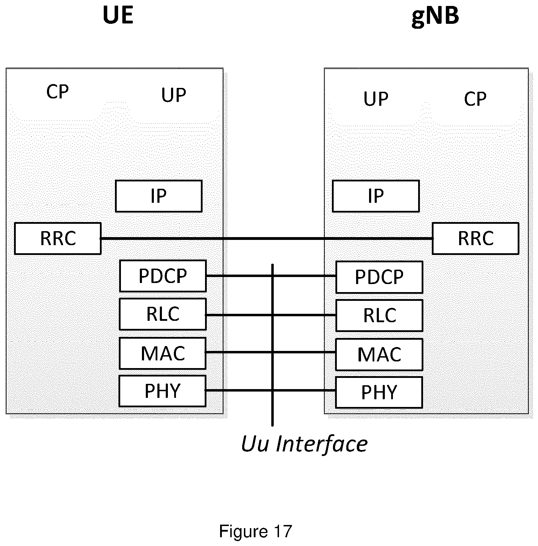

Figure 17 is a block diagram of a protocol stack for user plane and control plane;

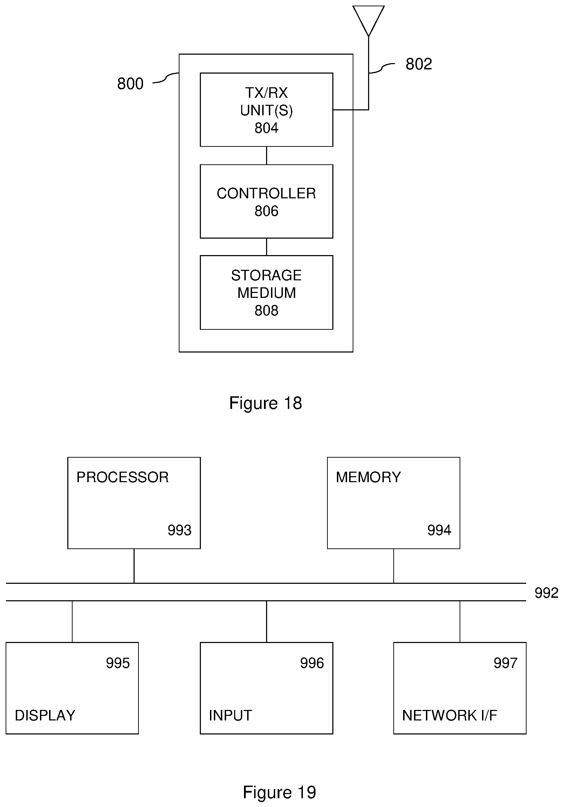

Figure 18 is a block diagram of a base station or UE; and
Figure 19 is a block diagram of a computing device, such as a server in the DN, on which an algorithmic application may execute.

### Detailed Description

Arrangements herein include procedures and signalling in a wireless network to support the control of AI/ML (or other computationally intensive) processing taking place in close co-operation with a base station.

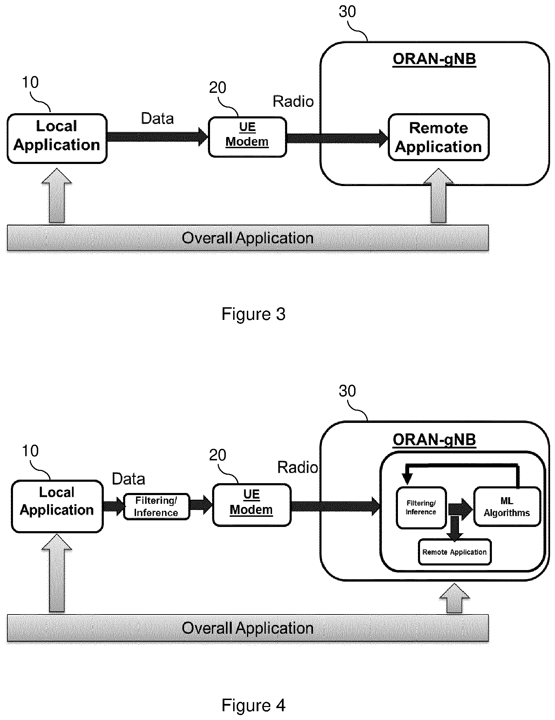

Included in this is the control of inference/filtering for applications using AI/ML. Methods herein use the concept of a distributed application as shown in Figure 3, where a local application part 10 connected to a UE 20 and modem is connected via a radio interface to a remote application part running on the base station 30 (shown as an ORAN - gNB). The local application executing on the UE produces data which is sent via the UE modem over the radio interface to the ORAN-gNB, where the remote part of the application is executing.

The advantage of this type of distributed application is that the processing of data may be shared between local processing in the device connected to a network and the network device itself. It is foreseen that the amount of data processing performed locally and remotely may be changed dynamically at any time. The advantage of performing processing locally is that there is less delay between the generation of data and subsequent processing, the disadvantage is that processing would typically use scarce local processing resources and possibly power resources for battery operated local devices. The advantage of remote processing is that more powerful data processing may easily be performed, and the remote processing is generally not power limited. Also, the remote processing may more easily use knowledge of overall system parameters and settings from other devices connected to the network, and the network operational status.

One specific application envisaged for this is a machine learning system as shown in Figure 4. The following examples all refer to AI/ML, but it will be understood that they apply equally to other applications running on the UE and base station/DN.

In Figure 4 a local application part produces data which may be filtered before sending the data over the network using the UE modem and radio interface as before. This data is then transferred to an AI/ML processing block/module. The AI/ML processing block is in the base station, or closely coupled to the base station. It is configured to perform further data processing as required by the overall application (which encompasses both local and remote elements).

The data may undergo filtering/inference in the UE local application and in the remote application. Filtering may be seen as part of the processing of the ML algorithm in which not all data is needed to perform the data prediction/classification as the output of the application. Some data is filtered out and not used in the inference processing step which provides the prediction, so filtering may be seen as a possible first step in inference. Reference herein to filtering/inference is to any filtering and/or inference which takes place. Both of these processes may act to reduce the quantity/volume of data which is to be transferred.

Typically in a ML system, filtering/inference is carried out after training has taken place. Inference requires less computing resources and bandwidth than training. Filtering/inference is the part that after training takes smaller batches of real-time data and efficiently produces a prediction or classification based on the data. ML inference is modelled as both filtering and processing in the ML model. By doing this modelling some of the inference type of processing may easily be moved into different physical nodes in the system. Assuming that training has already occurred, arrangements herein may control the application execution at the base station and/or UE, for example, to support the use of small(er) packets of data from the local application without requiring extensive higher layer processing and signalling to occur.

One problem addressed herein is the transfer of initial application data from the local application to the remote application.

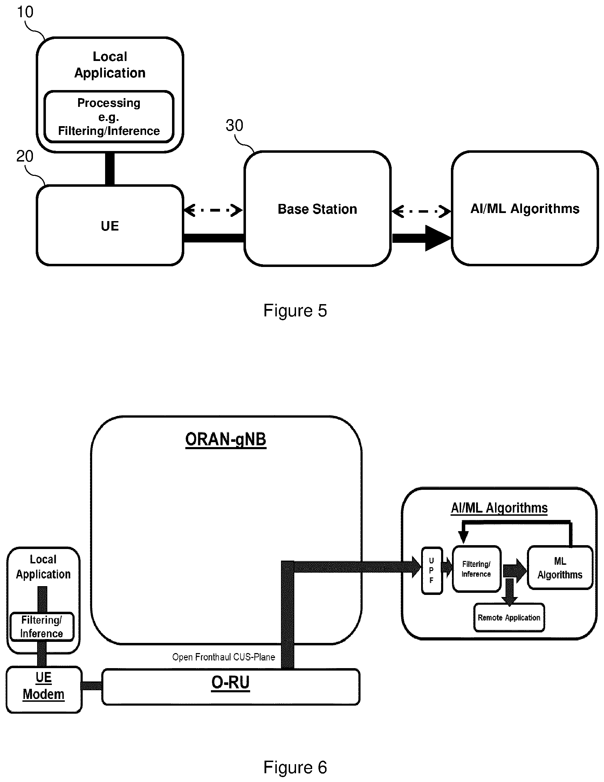

Figure 5 is an overall diagram of a suitable arrangement. Application data is shown flowing between the local part of the application running on or close to the UE via the base station to the remote (and potentially computationally intensive) part of the application, shown as AI/ML algorithms. The double- sided arrow between the UE and the base station and between base station and the AI/ML algorithms represents the transmission of an application parameter when the UE first initiates connection to the base station as the application starts executing. In an alternative arrangement, the remote part of the application executes partially or entirely within the base station.

Typically in any application the start-up phase for the application includes the setting up of a User Plane (UP) data pipe for the transfer of application data. This may typically take up to 100ms and would contribute significantly to performance degradation for many applications. Arrangements herein solve this problem by embedding the remote application in the base station (or in the DN and attached to the base station) and allowing it to access initial connection messages such as radio parameters directly such as from the Radio Resource Configuration (RRC) processing that occurs in the base station. The arrangements address the sending of initial control information from the local application to the remote application. They solve the delay problem by enabling the remote application to have the local application information as soon as possible. This is enabled by embedding the initial control information in the very first radio communication message between the local device and base station.

Arrangements herein optionally use base station real time (or near real time) control configuration, for example in an ORAN context to optimise the performance of AI/ML Applications. In this arrangement real time (or near real time) is used to refer to control which takes place at the same time as data is processed without any significant delay. For example when packets of data are being processed it is expected that the optimisation would occur for every packet received.

Suitable arrangements may also use the parameter sent when the connection is initiated for network-controlled configuration of filtering of application data to process the data streams to/from the application(s) in the system. The advantage of controlling filtering of application data with network signalling is that the needs of the application are more tightly coupled with the capabilities and available resources of the devices transferring the application data over a wireless interface. For example, video processing applications which may send high data rate streams to pattern recognition AI applications could reduce the volume of application data streams by controlling the filtering of the application data. The advantage of this is the reduced processing needs of the devices used for the transfer of the data over the wireless interface.

The current state of the art for ML application data processing from a UE/Modem connected to a wireless network is shown in Figure 6.

In this and the following examples the local application (or a separate device executing the local application, if the local application does not execute directly on the UE) is connected to the UE, and the UE supplies data from the local part of the AI application or similar application to the remote application via the RAN and gNB.. The data is routed via the UPF. Filtering is shown as part of the local and remote application, and this could be present within the UE/modem and/or optionally in the gNB. Filtering and inference are shown, but other processing may be substituted. The remote application has access to the ML algorithms and filtering/inference but may be provided separately therefrom. For example it may be a parent application in the cloud. The application may include calls to the processing in the gNB.

The example shown is an O-RAN example, with open fronthaul control and user planes, shown as CUS-plane in the diagram. The UE modem connects to the O-RAN Radio Unit (O-RU) which is a logical node hosting Low-PHY layer and RF processing based on a suitable lower layer functional split.

Data, which have been filtered by the local application, are transmitted through the base station to remote AI/ML algorithms at the base station. In fact, in this figure there are two logically different functions containing ML algorithms. The first one is the local application which passes information to the UE/Modem. The UE/Modem may be a user terminal (e.g. mobile phone) or a modem (this could be a standalone UE or an MTC terminal or a communications module). The UPF function shown in the AI/ML algorithms module represents the 5G core network function for the User Plane Function. This UPF is needed as in 5G there is no easy access to the UP data flows within the ORAN-gNB and the inventors have come to the realisation that the easiest way to access UP data is via the UPF. The data passes through the O-RU and O-DU to the O-CU-UP.

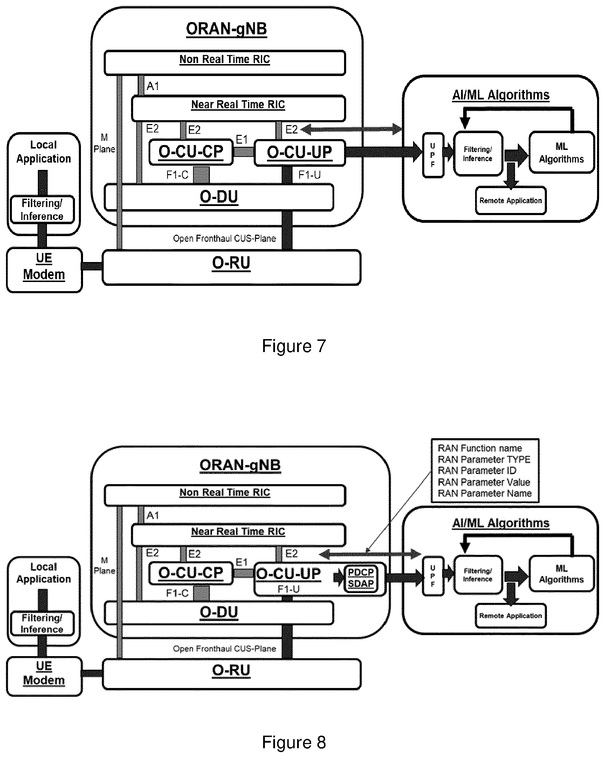

Some arrangements here make use of the architecture and signalling framework opportunities from the use of the O-RAN Architecture introduced above (see https://www.o-ran.org/ the relevant parts of which are incorporated herein by reference). This is illustrated in Figure 7, with the same parts of the local and remote AI application as described in Figure 6. The basic O-RAN architecture is as shown in Figure 2.

The bi-directional line connecting the AI/ML algorithms and the E2 Interface represents a new and valuable part of the arrangement, as it is advantageous to be able to access such information as UE Measurements and Configuration Information that are not obtainable from the O-CU-UP connection to the UPF in the AI/ML Algorithms. The application parameter from the connection message passes through this interface.

Figure 8 differs from Figure 7 in that it shows explicit Information Element (IE) transfer, including RAN Parameter values and names. These may include the RAN function name, RAN Parameter TYPE, RAN Parameter ID, RAN Parameter Value and RAN Parameter Name.

Figure 8 also shows how the O-CU-UP includes the processing applied to the UP data as part of the PDCP (Packet Data Convergence Protocol) and SDAP (Service Data Adaptation Protocol) Functions. This shows that UP data is available within the O-CU-UP entity but only at the PDCP and SDAP protocol level (but not as Internet Protocol (IP) Flows, e.g. TCP/IP). That is, UP data cannot terminate in gNB (anchor point), but packet inspection is possible.

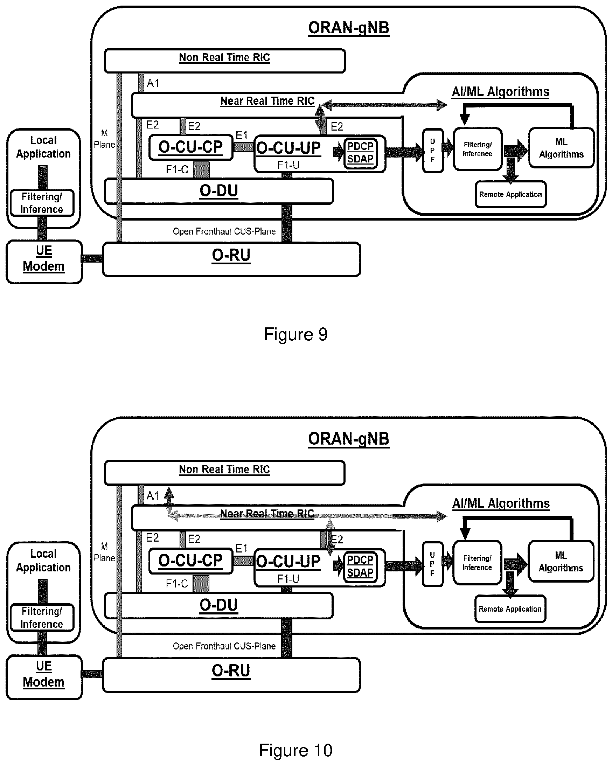

Figure 9 shows another placement option for the AI/ML algorithms in which the AI/ML algorithms are operating within the same entity as the ORAN-gNB, and actually implemented in the Near Real Time RIC. This allows the AI/ML algorithms to directly act on the information available on the E2 interface without the need for an external interface.

This arrangement uses the E2 interface between the O-CU-UP and Near Real time RIC to transfer application data, as well as the connection from the O-CU-UP to the UPF at the PDCP/SDAP protocol level.

As a further refinement of the architecture, Figure 10 shows how the information from the A1 Interface, and thus any data collected in the Non Real Time RIC may also be used as part of the improvement of the operation of the AI/ML Algorithms. The Non Real Time RIC includes service and policy management network management functions. The Non Real Time RIC receives and acts on reliable data from the CU and DU in a standardised format over the A1 interface. The algorithms in the Non Real Time RIC provide the capability to modify RAN behaviours based on the operational requirements set by network operators.

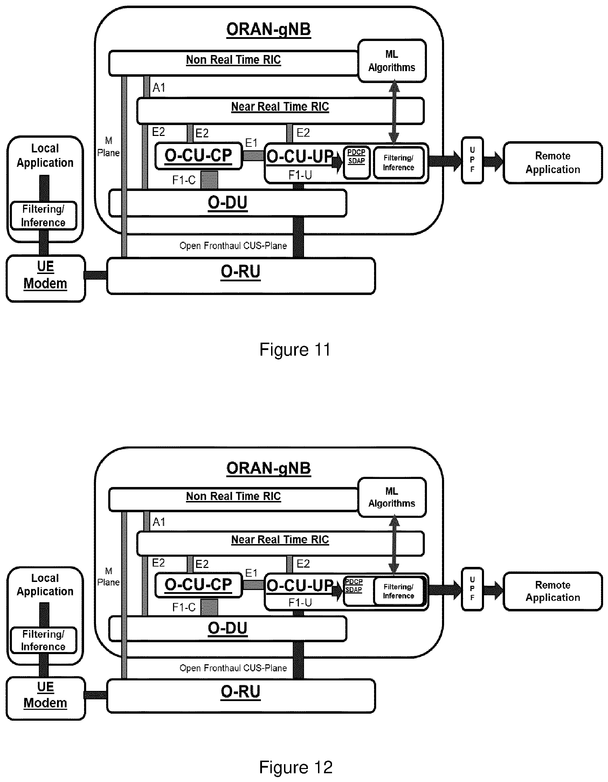

In an alternative architecture shown in Figure 11, the remote application is moved out of the ORAN-gNB, connected to the UPF function in the 5G Core network. In this architecture the ML Algorithms reside in the Non Real Time RIC and control the filtering/Inference of the UP data as an additional function placed after the PDCP/SDAP functions in the O-CU-U entity. The ML algorithms, as filtered and/or as processed by inference, are fed into the remote application via the UPF.

A final implementation choice is shown in Figure 12, where the filtering/inference Functions are combined as part of the PDCP/SDAP Entity, thus allowing the inclusion of this function simply by 3GPP specification changes to the operation of either PDCP or SDAP Protocols.

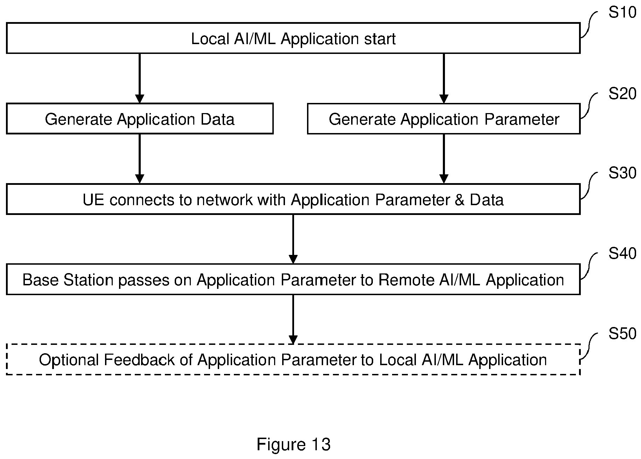

Shared between all these different implementations is the way in which the device initially connects to the network, allowing extra information to be carried in the initial data sent from the device to the base station. This is shown in Figure 13.

In S10, the local AI/ML application starts. In S20 the application in parallel generates both application data and an application parameter (which herein is also referred to specifically as the "Al Indicator"). As the UE makes its initial connection to the network (typically moving from an idle state such as RRC_IDLE or RRC_INACTIVE state to a connected states such as RRC Connected state) in S30 then the application parameter is sent to the AI/ML application for control of the algorithms. The base station passes on the application parameter to the AI/ML application in S40, potentially using the E2 interface. In optional step S50, there may be feedback to the local application. For example information about radio bearers or other service and policy management and RAN analytic information may assist in the fine tuning of the AI/ML application.

The connection in S30 may vary according to circumstances. Typically, when a device connects to a 5G network it may use one of two different signalling methods as shown in Figure 14a and Figure 14b.

In S100 of Figure 14a, the UE sends the AI indicator along with MSGA (PRACH preamble and PUSC transmission) and waits for the gNB MSGB response or sends MSG3 for RRC Connection Request. In S110 there is the resulting contention resolution of MSGB/MSG4 from the gNB to the UE. There follows an optional data transfer in either or both directions in S120 and RRC release later in S130.

In S200 of Figure 14b, on the other hand, the UE sends the AI indicator along with Configured Grant Type 1, a grant-free uplink transmission feature, also known as Transmission without grant (TWG). i.e. data transmission without a resource request. The gNB responds with DL data transmission on CRNTI in S210 and the UE data may immediately start data transmission. Steps S220 and S230 are identical to S120 and S130.

In essence the two different methods are with and without a configured grant (CG), but both include the new AI Indicator. The AI indicator is intended to provide the gNB with information which allows the application data to be routed directly to the AI/ML processing in the gNB.

More generally, a similar indicator could be used to indicate that some kind of local processing is to be carried out in the gNB, not necessarily using AI/ML techniques.

There are many different use cases possible for this AI Indicator including using this early indication as a signal for the AI/ML algorithms running in the gNB.

Other examples of the use include the control of the filtering/inference in the AI/ML applications, for example switching to a known pre-trained set of inference without the need for training. Another example is the use of the indicator to indicate that re-training is needed, and the application may move to a training mode of operation, where generally more data is needed to facilitate the future filtering and inference settings.

Specifically the AI indicator/parameter may be structured as one or several bits, depending on the type of information that these bits are designed to convey.

Typically the design of the parameter is flexible to enable different uses for control information to be used by specific (e.g. specific AI/ML) applications. For example, in the specifications for the AI indicator a number of bits may be defined, and the purpose of the bits not defined in the specification but rather left for the network/service operator to define.

An example of the structure is shown in Figure 15, where the Application Indicator/Parameter is sent together with data used for the application but, for example, differentiated by using an Application Data End indicator within the application data packet inserted after the data and before the parameter or vice versa. In this case, the parameter is sent in the same data packet as the application data.

An alternative is to send the application parameter as separate data as shown in Figure 16. In this example, the transport of the application parameter could use a Control Channel, which may be separately defined for the specific radio communication method used.

For example in the case of a 5G/4G system the control channel could be the Radio Resource Channel (RRC) as shown in Figure 17, where the Control Plane (CP) is used to transfer RRC information:
The intention of the AI indication or other parameter is primarily to act as a control signal (not as data) from the UE to the network (where the network includes the architecture components as shown in Figure 7, for example). The network will then act on the receipt of the control information from the UE. The network actions could be targeted towards one specific UE, or in another scenario the network actions may depend on the receipt of the AI indication from several UEs. For instance, a plurality of UEs may execute a local part of the application and send data to the same base station (or to a different base station but the same remote part of the application). For example if the AI indicator is sent from a set of cameras attached to UEs sending data to the network, then the network action taken as a result of the parameter e.g. for increasing/decreasing scheduled data rate, may apply to all the cameras in the set.

Specific examples of the AI indicator acting as AI control include:
- UE sending a request to the AI/ML application that its own internal algorithms have detected the need for the AI/ML to be re-trained (For example by the network subsequently sending information to the UE to only send known test data until re-training has been completed).
- UE sends an AI indicator that immediately switches the AI/ML algorithm into a different (known) mode of operation, e.g. The UE sends a different amount of data (i.e. bit rate) from the connected device to the network.
- UE sends AI indicator to ask the network to perform an immediate action, for example disabling filtering of data (e.g. moving immediately to full rate video data, when a video stream is being sent).
- UE sends AI control to indicate a problem in the device processing, which the AI/ML entity in the network may then try and diagnose and optionally request from the network operations some additional help/support.
- The AI (or other non-AI) control may be used to act as a more generic indicator of the amount of data being demanded by the application, for example when multiple devices are used to send data, the device itself may decide that it requires more bandwidth for the data, this Application level bandwidth request may be processed by the AI/ML algorithm and result in a subsequent change in UL data rate provision by the base station. This request could be sent as part of the data received by the Non Real Time RIC and conveyed to the Non Real Time RIC, where it is used by the base station scheduler to determine the appropriate bandwidth. For such a bandwidth change it is assumed that the information in the base station is also available as part of the radio bearer setup information, for example the specific different bandwidths are already known to the application and also the bearer management function in the base stations.

Where such an indication may be single or multi-bit depending on the granularity of the information required.

### Hardware Implementation

Figure 18 shows the hardware structure of a base station or UE 800 suitable for use with invention embodiments, including an antenna 802, transmission and reception unit(s) 804, a controller 806, and a storage medium or memory 808. Base station/UE 800 may be an example of UE 20 or base station 30 in Figure 5 and elsewhere.

The base station or UE belongs to at least one RAT and the base station may, for example, be described as an eNB or take a NR/5G form and be described as a gNB or ORAN-gNB. Other/different base stations may take any other form of a different RAT as long as they are suitable for transmitting and receiving signals from other stations.

In any embodiment, the controller 806 may be, for example, a microprocessor, digital signal processor (DSP), application-specific integrated circuit (ASIC), field-programmable gate array (FPGA), or other logic circuitry programmed or otherwise configured to perform the various functions described above. For example, the various functions described above may be embodied in the form of a computer program stored in the storage medium 808 and executed by the controller 806.

Figure 19 is a block diagram of a computing device which may be used to implement the methods in a telecommunications system as described herein. For example, the computing device may store and run a local part or a remote part of the application shown in Figure 3 and elsewhere. The computing device comprises a processor 993, and memory, 994. Optionally, the computing device also includes a network interface 997 for communication with other computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, a term which may refer to a single medium or multiple media (e.g., a centralised or distributed database and/or associated caches and servers) configured to carry computer-executable instructions or have data structures stored thereon. Computer-executable instructions may include, for example, instructions and data accessible by and causing a general-purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing code stored in the memory to implement the various different functions of running a complex algorithm using data from one or more UEs and/or determining the resources to be used for transmission of data to/from those UEs as described here and in the claims.

The memory 994 may store data being read and written by the processor 993, for example data from AI applications executing on the UEs and/or data corresponding to network configuration. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The network interface (network I/F) 997 may be connected to a network, such as the DN as part of the Internet, and is connectable to other such computing devices via the network. The network I/F 997 may control data input/output from/to other apparatus via the network.

The (Al) algorithm application and/or determination application shown in the Figures in the DN may be a processor 993 (or plurality thereof) executing processing instructions (a program) stored on a memory 994 and exchanging data with the base station via a network I/F 997. In particular, the processor 993 may execute processing instructions to receive, via the network I/F, data and/or possible network configurations from the base station and to determine at least one preferred network configuration from the possible network configurations and report the preferred network configurations to the base station, for use in the application on the UE.

Methods embodying aspects of the present invention may be carried out on a computing device such as that illustrated in Figure 19. Such a computing device need not have every component illustrated in Figure 19 and may be composed of a subset of those components. A method embodying aspects of the present invention may be carried out by a single computing device in communication with one or more data storage servers via a network. The computing device may be a data storage itself storing and processing data and preferred and selected network configurations.

A method embodying aspects of the present invention may be carried out by a plurality of computing devices operating in cooperation with one another. One or more of the plurality of computing devices may be a data storage server storing at least a portion of the preferred and selected network configurations.

### Summary

Methods herein relate to transfer of an initial application level parameter for the control of an AI/ML or other algorithm executing on or closely connected to a base station.

The methodology introduces procedures and signalling in a wireless network to support optimisation of control of inference-based filtering of data using AI/ML. Suitable arrangements use base station (Non) Real Time Control configuration to optimise the performance of AI/ML or other applications.

One main set of problems addressed are disadvantages and limitations of current control of inference based filtering of data using AI/ML, which within architectures such O-RAN are not currently able use radio interface information from the base station Real time Control unit to quickly process the data flows in an application using AI/ML, since the information has not been send in this way before.

A benefit of the arrangements herein is in improving processing such as initial inference/filtering, which may be specifically achieved by the fast transfer of application layer information to an embedded application in the base station or DN. The arrangements herein detail the initial signalling from the application to the base station in a situation in which an initial data connection is made. The arrangements support the use of ML algorithm(s) to enable improved remote inference/filtering for AI/ML applications with respect to particular desired characteristics for a particular local application.

## Claims

1. A method in a telecommunications system including a User Equipment, UE, at which a local part of an application producing application data executes and a base station, at which a remote part of the application executes, the method comprising:
when the local part of the application at the UE starts to execute, the UE sending an initial connection message to the base station to initiate a connection with the base station, the initial connection message including an application parameter generated by the local part of the application; and
the base station passing the application parameter to the remote part of the application.

2. A method according to claim 1, wherein the application parameter is sent in a control channel used to set up the connection with the base station, for example embedded within a Radio Resource Control, RRC, message.

3. A method according to any of the preceding claims, further comprising transfer of application data produced by the application between the UE and the base station.

4. A method according to any of the preceding claims, wherein the base station, in response to receipt of the application parameter, changes the execution of the application and/or sends feedback from the remote part of the application to the UE and/or changes one or more transmission parameters in response to the application parameter.

5. A method according to any of the preceding claims, wherein the remote application executes directly on the base station or on an entity in a data network directly connected to the base station and the local application executes directly on the UE or on a device directly connected to the UE.

6. A method according to any of the preceding claims, wherein the telecommunications system is a New Radio, NR, system and the method further comprises routing application data from the local application to the remote application via the User Plane Function, UPF.

7. A method according to any of the preceding claims, wherein the base station is an Open Radio Access Network, O-RAN, base station and the application parameter is passed via the O-RAN Central Unit - User Plane, O-CU-UP, to the remote application or to algorithms used in the remote application.

8. A method according to claim 7, further comprising the O-RAN base station passing the application parameter to the application over the E2 interface from the O-CU-UP (O-RAN Central Unit - User Plane) to the application.

9. A method according to claim 7 or 8, wherein algorithms used in the remote application execute in the Non Real Time Radio Access Network Intelligent Controller, Non-RT RIC, with filtering in the O-RAN Central Unit - User Plane, O-CU-UP, and data is transferred via the UPF to the remote application.

10. A method according to any of the preceding claims, wherein the application is a Machine Learning, ML, application and the application parameter is an Artificial Intelligence, Al, indicator used in an inference and/or filtering stage of the ML algorithm, preferably wherein the AI indicator controls filtering of application data sent between the UE and the base station.

11. A telecommunications system including a User Equipment, UE, and a base station, wherein:
a local part of an application producing application data executes at the UE and a remote part of the application executes at the base station;
when the local part of the application starts to execute, the UE is configured to send an initial connection message to the base station to initiate a connection with the base station, the initial connection message including an application parameter generated by the local part of the application; and
the base station is configured to pass the application parameter to the remote part of the application.

12. A User Equipment, UE, for telecommunications, at which a local part of an application producing application data executes, wherein:
when the local part of the application starts to execute, the UE is configured to send an initial connection message to a base station for telecommunication to initiate a connection with the base station, the initial connection message including an application parameter generated by the local part of the application for use in a remote part of the application.

13. A base station for telecommunications and at which a remote part of an application executes, wherein:
the base station is configured to receive an initial connection message for telecommunication sent from a UE to initiate a connection with the base station, the initial connection message including an application parameter generated by a local part of the application when the local part of the application starts to execute; and
the base station is configured to pass the application parameter to the remote part of the application.

14. A telecommunications method in a User Equipment, UE, at which a local part of an application producing application data executes wherein:
when the local part of the application starts to execute, the UE sends an initial connection message for telecommunication to a base station to initiate a connection with the base station, the initial connection message including an application parameter generated by the local part of the application.

15. A telecommunications method in a base station at which a remote part of an application executes, wherein:
the base station receives an initial connection message for telecommunication sent from a UE to initiate a connection with the base station, the initial connection message including an application parameter generated by a local part of the application when the local part of the application starts to execute; and
the base station passes the application parameter to the remote part of the application.

## Amended claims

### Amended claims in accordance with Rule 137(2) EPC.

1. A method in a telecommunications system including a User Equipment, UE, (20) at which a local part of a distributed application (10) producing user plane data executes and a base station (30), at which a remote part of the distributed application executes, the method comprising:
when the local part of the distributed application (10) at the UE (20) starts to execute, the UE (20) sending (S30) a connection message to the base station (30) to initiate a connection with the base station (30), the connection message including an application parameter generated by the local part of the distributed application (10); and
the base station (30) passing (S40) the application parameter to the remote part of the application.

2. A method according to claim 1, wherein the application parameter is sent in a control channel used to set up the connection with the base station (30), for example embedded within a Radio Resource Control, RRC, message.

3. A method according to any of the preceding claims, further comprising transfer of user plane data produced by the application between the UE (20) and the base station (30).

4. A method according to any of the preceding claims, wherein the base station (30), in response to receipt of the application parameter, changes the execution of the application and/or sends feedback from the remote part of the application to the UE (20) and/or changes one or more transmission parameters in response to the application parameter.

5. A method according to any of the preceding claims, wherein the remote part of the application executes directly on the base station (30) or on an entity in a data network directly connected to the base station (30) and the local part of the application (10) executes directly on the UE (20) or on a device directly connected to the UE (20).

6. A method according to any of the preceding claims, wherein the telecommunications system is a New Radio, NR, system and the method further comprises routing user plane data from the local part of the application (10) to the remote part of the application via the User Plane Function, UPF.

7. A method according to any of the preceding claims, wherein the base station (30) is an Open Radio Access Network, O-RAN, base station and the application parameter is passed via the O-RAN Central Unit - User Plane, O-CU-UP, to the remote part of the application or to algorithms used in the remote part of the application.

8. A method according to claim 7, further comprising the O-RAN base station (30) passing the application parameter to the application over the E2 interface from the O-CU-UP (O-RAN Central Unit - User Plane) to the application.

9. A method according to claim 7 or 8, wherein algorithms used in the remote part of the application execute in the Non Real Time Radio Access Network Intelligent Controller, Non-RT RIC, with filtering in the O-RAN Central Unit - User Plane, O-CU-UP, and data is transferred via the UPF to the remote part of the application.

10. A method according to any of the preceding claims, wherein the application is a Machine Learning, ML, application and the application parameter is an Artificial Intelligence, Al, indicator used in an inference and/or filtering stage of the ML algorithm, preferably wherein the AI indicator controls filtering of user plane data sent between the UE (20) and the base station (30).

11. A telecommunications system including a User Equipment, UE, (20) and a base station (30), wherein:
a local part of an application (10) producing user plane data executes at the UE (20) and a remote part of the application executes at the base station (30);
when the local part of the application (10) starts to execute, the UE (20) is configured to send a connection message to the base station (30) to initiate a connection with the base station (30), the connection message including an application parameter generated by the local part of the application (10); and
the base station (30) is configured to pass the application parameter to the remote part of the application.

12. A User Equipment, UE, (20) for telecommunications and at which a local part of an application (10) producing user plane data executes, wherein:
when the local part of the application (10) starts to execute, the UE (20) is configured to send a connection message to a base station (30) for telecommunication to initiate a connection with the base station (30), the connection message including an application parameter generated by the local part of the application (10) for use in a remote part of the application.

13. A base station (30) for telecommunications and at which a remote part of an application executes, wherein:
the base station (30) is configured to receive a connection message for telecommunication sent from a UE (20) to initiate a connection with the base station, the connection message including an application parameter generated by a local part of the application (10) when the local part of the application (10) starts to execute; and
the base station (30) is configured to pass the application parameter to the remote part of the application.

14. A telecommunications method in a User Equipment, UE, (20) at which a local part of an application (10) producing user plane data executes wherein:
when the local part of the application (10) starts to execute, the UE (20) sends a connection message for telecommunication to a base station (30) to initiate a connection with the base station (30), the connection message including an application parameter generated by the local part of the application (10).

15. A telecommunications method in a base station (30) at which a remote part of an application executes, wherein:
the base station (30) receives a connection message for telecommunication sent from a UE (20) to initiate a connection with the base station (30), the connection message including an application parameter generated by a local part of the application (10) when the local part of the application (10) starts to execute; and
the base station (30) passes the application parameter to the remote part of the application.
